# EUROPÄISCHE PATENTANMELDUNG

(11) **EP 2 116 792 A1**
(43) Veröffentlichungstag der Anmeldung: **11.11.2009**
(21) Anmeldenummer: 09001806.0
(22) Anmeldetag: 10.02.2009
(51) Int. Cl.: F24J 2/26, F24J 2/52, F16B 45/00

(54) **Niederhalter**

(30) Priorität: 14.02.2008 DE 102008009091
(71) Anmelder: GREENoneTEC, 9300 St. Veit/Glan (AT)
(72) Erfinder: Ragossnig, Gernot, 9300 St. Veit (AT); Obermann, Wolfgang, 9061 Klagenfurt (AT)
(74) Vertreter: Becker, Thomas

(57) **Zusammenfassung**

Die Erfindung betrifft einen Niederhalter umfassend einen Haltearm (42), der mit einem Halteteil (44) ausgebildet ist und der mindestens einen Rastabschnitt (58) aufweist, sowie einen mit diesem Niederhalter (40) ausgerüsteten solartechnischen Kollektor.

## Beschreibung

Die Erfindung betrifft einen Niederhalter sowie einen mit diesem Niederhalter ausgerüsteten solartechnischen Kollektor.

Ohne den Erfindungsgedanken auf die Anwendung für/in einem solar-technischen Kollektor zu beschränken, werden der Stand der Technik und die Erfindung nachstehend für diesen Anwendungszweck näher beschrieben.

Ein solartechnischer Kollektor besteht üblicherweise aus einem kastenförmigen Gehäuse und einer transparenten Abdeckung, die im Montagezustand der Sonne zugewandt ist. Hinter der Abdeckung liegt mit Abstand ein Absorberblech, auf dessen Rückseite (dem Gehäuseboden zugewandt) so genannte Registerrohre und Sammelrohre verlaufen, in die die Registerrohre einmünden, wobei Registerrohre und Sammelrohre dem Transport eines Wärmeträgers, beispielsweise Wasser oder Glykol, dienen. Die Sammelrohre liegen üblicherweise auf einem Wärmedämmmaterial auf, beispielsweise Mineralwolle.

Ein solcher Kollektor ist beispielsweise in der EP 1775525 A1 offenbart. Dort wird auch beschrieben, dass die Sammelrohre über Niederhalter, die am Gehäuse befestigt werden, in ihrer Auflageposition auf der Mineralwolle fixiert werden können.

Dazu wird ein L-förmiger Niederhalter vorgeschlagen, der an einem Ende gabelförmig gestaltet ist und auf einen Steg am Rahmen des Kollektors aufgesetzt werden kann. Die Konstruktion liegt vollständig im Kollektorgehäuse. Sie bedarf einer speziellen Ausbildung der Seitenwände des Gehäuses. Schließlich besteht die Gefahr, dass der Niederhalter, der auf den Steg aufgesteckt wird, verrutscht.

Ziel der Erfindung ist es, einen Niederhalter der gattungsgemäßen Art anzubieten, der eine einfache Montage erlaubt, das zu haltende Bauteil sicher hält und vorzugsweise so gestaltet ist, dass er auch zusätzliche Aufgaben übernehmen kann.

Grundgedanke der Erfindung ist es, den Niederhalter so auszubilden, dass er von außen durch eine Öffnung einer Wand, beispielsweise einer Seitenwand eines Gehäuses eines solartechnischen Kollektors, montiert und festgelegt werden kann.

Dies vorausgeschickt liegt der Erfindung der weitere Gedanke zugrunde, den Niederhalter mit einem Haltearm auszubilden, der durch die Gehäuseöffnung hindurchgeführt wird und der endseitig ein Halteteil aufweist, das gegen die Wand zur Anlage kommt und dabei den Niederhalter in der gewünschten Position festlegt.

Es ist selbstverständlich, dass die Öffnung im Gehäuse (in der Wand) so platziert sein muss, dass bei der Montage des Niederhalters das niederzuhaltende Bauteil, beispielsweise das Sammelrohr des solartechnischen Kollektors, kraft- und/oder formschlüssig beaufschlagt wird.

Aus der vorgenannten Montage ergibt sich, dass der Halteteil gegen die Außenfläche der Montagewand anschlägt, während der Haltearm eine Fixierung gegenüber der Innenfläche der Montagewand schaffen soll, um den Niederhalter in einer definierten Position fixieren zu können.

Zu diesem Zweck sieht die Erfindung vor, den Haltearm mit mindestens einem elastisch verformbaren Rastabschnitt auszubilden, der so angeordnet ist, dass er in der Montageposition des Niederhalters einen kraftschlüssigen Anschlag gegenüber der Montagewand bildet.

In der allgemeinsten Ausführungsform ist der Niederhalter durch folgende Merkmale charakterisiert:
- einen Haltearm mit einer Breite b, einer Höhe h und einer Länge 1,
- der Haltearm ist an einem Ende seiner Länge mit einem Halteteil ausgebildet, das eine Breite B, eine Höhe H und eine Dicke L aufweist, wobei
- B größer b und/oder H größer h ist, und
- der Haltearm außenseitig mindestens einen Rastabschnitt aufweist, und zwar in einem, dem Halteteil benachbarten Bereich, wobei der Rastabschnitt im Abstand (A) zum Halteteil verläuft und unter Druckbelastung von außen elastisch verformbar ist.

Der Abstand (A) entspricht vorzugsweise der Dicke der Montagewand, so dass der Halteteil von außen und der Rastabschnitt von innen (nach seinem Auffedern) spielfrei gegen die Montagewand anliegen und den Niederhalter sicher fixieren.

Der elastisch verformbare Rastabschnitt kann im einfachsten Fall ein reversibel verformbarer Noppen sein, der zusammengequetscht wird, wenn der Niederhalter durch die Öffnung der Montagewand geführt wird und nach Passieren der Öffnung wieder in seine Ausgangsform zurückspringt und dabei den Niederhalter in der Öffnung der Montagewand fixiert.

Nach einer Ausführungsform ist der Rastabschnitt als Federarm ausgebildet, wobei das freie Ende des Federarms dem Halteteil benachbart liegt. Dabei kann der Federarm aus dem Haltearm ausgeschnitten sein, was den Vorteil einer einfachen Herstellung und kleinen Bauform hat.

Die Montage wird erleichtert und der Niederhalter sicher fixiert, wenn er mit zwei, an gegenüberliegenden Seiten von Breite oder Höhe des Haltearms angeordneten Rastabschnitten ausgebildet ist.

Dies können zwei nach außen am freien Ende aufgebogene Federarme sein, die dann, wenn der Niederhalter durch die Montageöffnung geführt wird, gegeneinander geführt werden und in ihre unbelastete Stellung zurückfedern, sobald der Haltearm des Niederhalters die Montageöffnung passiert hat.

Der Halteteil des Niederhalters kann als Platte ausgebildet werden, wodurch sich eine umlaufende Anlagefläche an die Montagewand ermöglicht.

Dabei ist es vorteilhaft, den Halteteil mit einer gewissen Dicke L auszubilden, um so im Randbereich des Halteteils ein Ende eines Kanals auslaufen zu lassen, der sich in den Haltearm fortsetzt und mit seinem zweiten offenen Ende in einem Bereich des Haltearms austritt, der nach der Montage des Niederhalters nicht bedeckt ist.

Bei einer Ausführungsform weist der Halteteil auf seiner, dem Haltearm zugewandten Seite einen Kanal auf, der sich in den Haltearm fortsetzt, wobei ein erstes offenes Ende des Kanals diesseits des Abstandes (A) aus dem Halteteil austritt und ein zweites offenes Ende des Kanals jenseits des Abstands (A) aus dem Haltearm austritt.

Das Merkmal eines "Abstands" (A) entspricht dabei im Wesentlichen der Dicke der Montagewand.

Um ein Verstopfen des als Lüftungskanal dienenden Kanals zu verhindern oder als Insektenschutz kann an mindestens einer Stelle in Längsrichtung des Kanals ein Gitter über den Kanalquerschnitt angeordnet werden. Auch dieses Gitter kann zum Beispiel dann, wenn der Niederhalter als Kunststoff-Spritzgussteil hergestellt ist, in-situ mit ausgeformt werden.

Ein wesentlicher Vorteil des Niederhalters liegt darin, dass er einstückig als Kunststoff-Teil preiswert herstellbar ist und neben der Haltefunktion beispielsweise auch die vorstehend erwähnte Belüftungsfunktion zum Beispiel bei einer Anwendung in einem Solarkollektor erfüllen kann.

Für den letztgenannten Anwendungsfall kann es sinnvoll sein, den Haltearm auf seiner, dem zu haltenden Bauteil zugewandten Seite zumindest abschnittweise gewölbt auszubilden, beispielsweise um ein Sammelrohr oder ein Absorberrohr eines Kollektors zu halten und gegen Verrutschen zu sichern. Ebenso ist es möglich, den Haltearm auf seiner, dem zu haltenden Bauteil abgewandten Seite plan auszubilden, beispielsweise bei der beschriebenen Anwendung parallel zum Absorberblech.

Der solartechnische Kollektor gemäß der Erfindung weist ein Gehäuse auf, ein in dem Gehäuse angeordnetes Absorberblech sowie Rohre zum Transport eines Wärmeträgers, wobei mindestens eine Wand des Gehäuses mindestens eine Öffnung aufweist, an der ein Niederhalter der beschriebenen Bauart zum Niederhalten mindestens eines der Rohre lösbar festlegbar ist. Es ist selbstverständlich, dass mehrere Niederhalter und damit mehrere Öffnungen in der/den Wänden des Gehäuses günstig sind, um eine gleichmäßige Fixierung des Absorberblechs und der zugehörigen Rohre sicherzustellen.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert.

Dabei zeigen:
- Figur 1:: ein Beispiel eines Niederhalters in perspektivischer Ansicht von unten
- Figur 2:: den Niederhalter nach Figur 1 in einer perspektivischen Ansicht von oben
- Figur 3:: den Niederhalter nach Figur 1 in einer Ansicht von unten
- Figur 4:: den Niederhalter nach Figur 1 in einer Einbauposition in einem Kollektorgehäuse in einer Seitenansicht, teilweise geschnitten
- Figur 5:: eine Ansicht analog Figur 4 im Montagezustand am fertig konfektionierten Kollektor
- Figur 6:: eine perspektivische Ansicht eines Solar-Warmwasserkollektors mit eingebauten Niederhaltern.

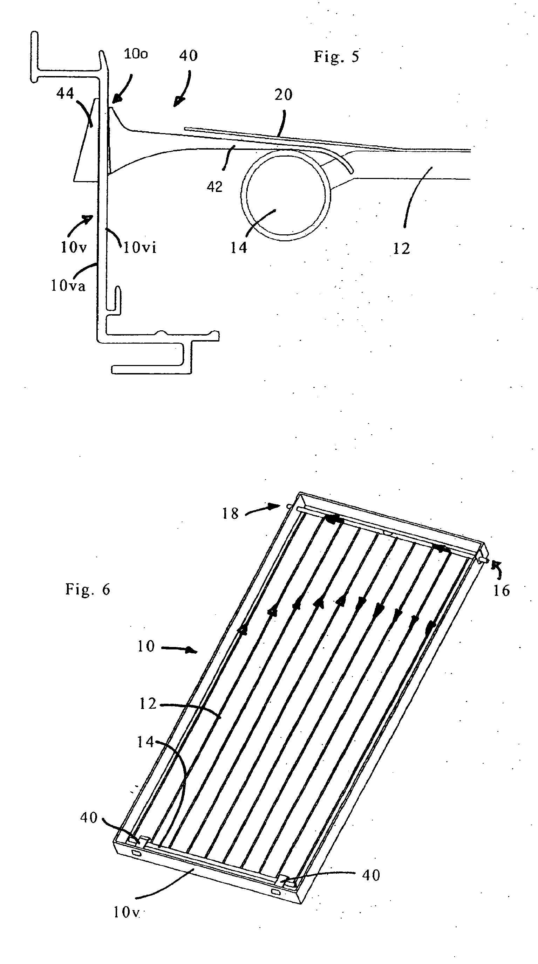

Figur 6 zeigt einen solartechnischen Kollektor mit einem wannenartigen Gehäuse 10, welches auf der, der Sonne zugewandten Seite von einer Glasabdeckung (nicht dargestellt) abgedeckt wird. Im Gehäuse 10 verlaufen so genannte Registerrohre (Absorberrohre) 12, die in Sammelrohre 14 einmünden. An dem in Figur 6 dargestellten oberen Ende weist ein Sammelrohr 14 einen Fluideintritt (bei 16) und einen Fluidaustritt (bei 18) auf. Die Strömungsrichtung des Fluids zwischen Eintritt 16 und Austritt 18 ist durch Pfeile schematisch dargestellt.

Die Rohre 12, 14 sind von einem in Figur 5 erkennbaren Absorberblech 20 bedeckt.

In Richtung der Sonneneinstrahlung betrachtet ist hinter den Rohren 12, 14 eine (ebenfalls nicht dargestellte) Wärmedämmung im Gehäuse 10 vorgesehen.

Zur Belüftung des Gehäuse-Innenraums und zum Niederhalten des in Figur 6 vorderen Sammelrohrs 14 greifen zwei Niederhalter 40 durch korrespondierende Öffnungen 10o in einer vorderen Stirnwand 10v des Gehäuses 10.

Analog kann auch das in Figur 6 obere Sammelrohr 14 über Niederhalter 40 gesichert werden.

Figur 5 zeigt, dass jeder Niederhalter 40 mit seinem Haltearm 42 auf dem Sammelrohr 14 liegt und dieses gegen die (nicht dargestellte) Wärmedämmung drückt.

Gemäß den Figuren weist der Haltearm 42 des Niederhalters 40 eine Breite b, eine Höhe h und eine Länge 1 auf.

Die Breite b ist dabei so definiert, dass sie der maximalen Breite der unbeweglichen Teile des Haltearms 42 entspricht. Die Höhe h des Haltearms 42 ist entsprechend definiert als die maximale Höhe des Haltearms 42 senkrecht zur Breite b.

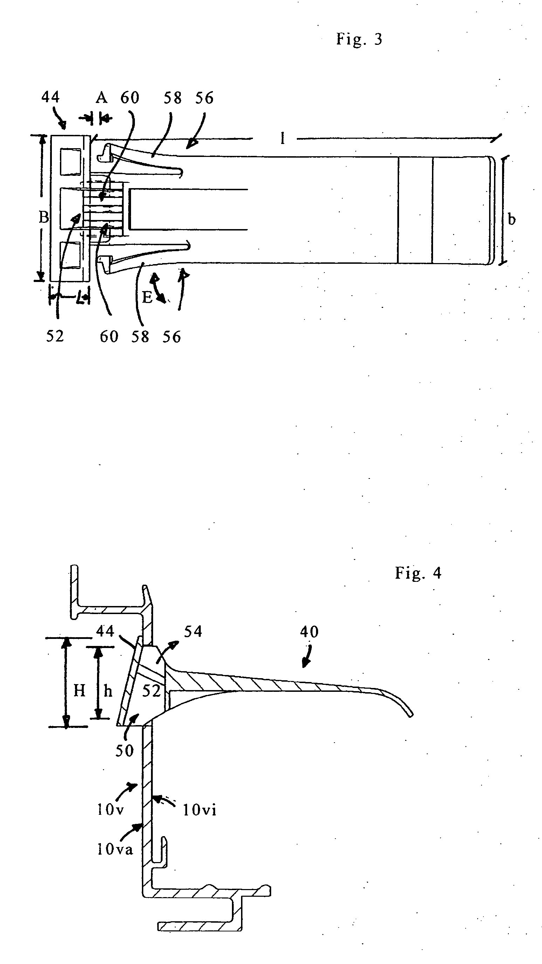

An einem Ende (in Figur 3: links) ist der Haltearm 42 mit einem Halteteil 44 ausgebildet, und zwar materialschlüssig. Der Halteteil 44 weist eine Breite B, eine Höhe H und eine Dicke L auf.

Analog zu den Dimensionierungen des Haltearms 42 sind B, H und L definiert.

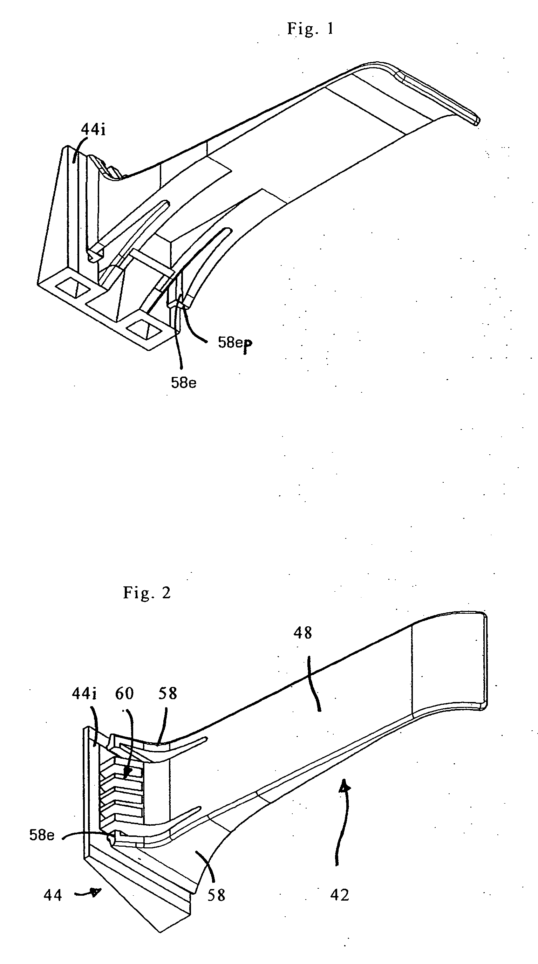

Gemäß Figur 5 weist der Halteteil 44 in der Seitenansicht angenähert eine Dreieckform auf. Dadurch wird unterseitig Raum für eine Ausnehmung 52 geschaffen (Figuren 1, 4), die sich in den Haltearm 42 fortsetzt und an der Oberseite 48 des Haltearms 42 austritt, wobei dieser Abschnitt gitterartig (bei 60) gestaltet ist. Hierdurch ergibt sich, wie in Figur 4 dargestellt, ein durchgehender Lüftungskanal 52 von einem Ende 50 zu einem anderen Ende 54.

Der Haltearm 42 weist an seinem, dem Halteteil 44 benachbarten Bereich (bei 56) zwei Rastabschnitte 58 auf, die korrespondierend (spiegelbildlich) zueinander angeordnet sind. Jeder Rastabschnitt 58 endet mit Abstand (A) zu einer korrespondierenden Innenwand 44i des Halteteils 44.

Jeder Rastarm 58 verläuft aus dem Haltearm 42 leicht nach außen gewölbt (Figur 3) und weist an seinem freien Ende einen nach innen abgekröpften Endabschnitt 58e auf. Dadurch werden in Pfeilrichtung E elastisch verformbare Federarme ausgebildet.

In den Figuren 4, 5 ist die vordere Stirnseite 10v des Kollektorgehäuses 10 dargestellt. Zur Montage des Niederhalters 40 wird dieser von außen (in den Figuren von links nach rechts) durch die Öffnung 10o in der Wand 10v hindurch geschoben, wobei die Rastabschnitte (Federarme) 58 entlang der Innenwände der Öffnung 10o nach innen gedrückt werden, bis der Niederhalter 40 so weit durch die Öffnung 10o hindurchgeschoben ist, dass die Rastabschnitte 58 zurückfedern können und gleichzeitig die abgekröpften Endabschnitte 58e sich mindestens teilweise an die Innenfläche 10vi der Stirnseite 10v beziehungsweise die Innenflächen der Öffnung 10o anlegen.

Dabei ist der Abstand A so bemessen, dass in der Montageposition der Halteteil 44 mit seiner Innenfläche 44i gegen eine Außenfläche 10va der Stirnwand 10v und der Haltearm 42 mit dem Teil 58ep des Endabschnitts 58e an der Innenfläche 10vi der Stirnwand 10v anliegt.

Daraus folgt, dass die Breite B und die Höhe H des Halteteils 44 größer sind als die Breite b beziehungsweise die Höhe h des Haltearms 42.

In der Montageposition (Figuren 4, 5) liegt der Niederhalter 40 fest montiert in der Öffnung 10o der vorderen Stirnwand 10v ein, wobei der Haltearm 42 im Wesentlichen horizontal verläuft und mit seinem freien, in das Kollektorgehäuse 10 hineinragenden, leicht gewölbten Ende auf dem Sammelrohr 14 aufliegt und dieses hält.

Auch in der Montageposition ermöglicht der Kanal 52 einen Luftaustausch zwischen dem Gehäuseinneren und einem Bereich außerhalb des Gehäuses, wodurch eine Belüftung des Inneren des Gehäuses 10 sichergestellt wird (Figur 4).

## Patentansprüche

1. Niederhalter mit folgenden Merkmalen:
1.1 einem Haltearm (42) mit einer Breite b, einer Höhe h und einer Länge 1,
1.2 der Haltearm (42) ist an einem Ende seiner Länge mit einem Halteteil (44) ausgebildet, das eine Breite B, eine Höhe H und eine Dicke L aufweist, wobei
1.3 B>b und/oder H>h ist
1.4 der Haltearm (42) weist in einem, dem Halteteil (44) benachbarten Bereich (56) außenseitig mindestens einen Rastabschnitt (58) auf, der im Abstand (A) zum Halteteil (44) verläuft und unter Druckbelastung von außen elastisch verformbar ist.

2. Niederhalter nach Anspruch 1, bei dem der Abstand (A) zwischen dem Halteteil (44) und einem benachbarten Ende (58e) des Rastabschnitts (58) der Dicke einer Wand (10v) entspricht, an der der Niederhalter montiert wird.

3. Niederhalter nach Anspruch 1, bei dem der Rastabschnitt (58) als Federarm ausgebildet ist.

4. Niederhalter nach Anspruch 3, bei dem der Federarm aus dem Haltearm (42) ausgeschnitten ist, wobei ein freies Ende (58e) des Federarms dem Halteteil (44) benachbart liegt.

5. Niederhalter nach Anspruch 1, mit zwei, an gegenüberliegenden Seiten von Breite oder Höhe des Haltearms (42) angeordneten Rastabschnitten.

6. Niederhalter nach Anspruch 1, dessen Halteteil (44) als Platte der Dicke L ausgebildet ist.

7. Niederhalter nach Anspruch 1, dessen Halteteil (44) einen Kanal (52) aufweist, der sich in den Haltearm (42) fortsetzt, wobei ein erstes offenes Ende (50) des Kanals (52) diesseits des Abstands (A) aus dem Halteteil (44) austritt und ein zweites offenes Ende (54) des Kanals (52) jenseits des Abstands (A) aus dem Haltearm (42) austritt.

8. Niederhalter nach Anspruch 7, bei dem sich an mindestens einer Stelle in Längsrichtung des Kanals (52) ein Gitter (60) über den Kanalquerschnitt erstreckt.

9. Niederhalter nach Anspruch 1, dessen Haltearm (42) auf seiner dem zu haltenden Bauteil (14) zugewandten Seite zumindest abschnittweise gewölbt ausgebildet ist.

10. Solartechnischer Kollektor mit einem in einem Gehäuse (10) angeordneten Absorberblech und Rohren (12, 14) zum Transport eines Wärmeträgers, wobei mindestens eine Wand (10v) des Gehäuses (10) mindestens eine Öffnung (10o) aufweist, an der ein Niederhalter (40) nach einem der Ansprüche 1-9 zum Niederhalten mindestens eines der Rohre (14) lösbar festlegbar ist.
